# EUROPÄISCHE PATENTSCHRIFT

(11) **EP 2 089 335 B1**
(45) Veröffentlichungstag und Bekanntmachung des Hinweises auf die Patenterteilung: **20.03.2019**
(21) Anmeldenummer: 07847190.1
(22) Anmeldetag: 15.11.2007
(51) Int. Cl.: C04B 14/06, C04B 24/26, C04B 40/06

(54) **TROCKENZEMENTFORMULIERUNG ZUM ZEMENTIEREN VON ERDBOHRLÖCHERN**
DRY CEMENT FORMULATION FOR CEMENTING HOLES IN THE EARTH
FORMULATION DE CIMENT SEC UTILISÉE POUR CIMENTER DES TROUS DANS LA TERRE

(30) Priorität: 17.11.2006 EP 06023904
(43) Veröffentlichungstag der Anmeldung: 19.08.2009
(73) Patentinhaber: Akzo Nobel Chemicals International B.V., 6824 BM Arnhem (NL)
(72) Erfinder: WILLIMANN, Hongli, 6340 Baar (CH); VALLEE, Franck, 68330 Huningue (FR); ZHANG, Charles, Beijing 100013 (CN)
(74) Vertreter: Akzo Nobel Chemicals IP Group
(86) Internationale Anmeldenummer: PCT/EP2007/062426
(87) Internationale Veröffentlichungsnummer: WO 2008/059037

(56) Entgegenhaltungen:
- WO-A-2006/094528
- US-A1- 2005 092 210

## Beschreibung

Die vorliegende Erfindung betrifft Trockenzementformulierungen zum Zementieren von Erdbohrlöchern, enthaltend in Wasser redispergierbare Dispersionspulver sowie die Verwendung der Trockenzementformulierungen. Des Weiteren betrifft sie spezifische Verwendungen von in Wasser redispergierbaren Dispersionspulvern in einer Zementslurry im Zusammenhang mit dem Zementieren von Erdbohrlöchern.

Erdbohrlöcher werden insbesondere zur Öl- und Gasförderung gebohrt. In der neueren Zeit finden sie auch vermehrt Anwendung zur Nutzung der Erdwärme. Die Bohrtiefe kann sehr unterschiedlich sein und kann von etwa 100 m bis 5000 m und mehr betragen. Die durchbohrten Schichten können daher unterschiedlichster Natur sein und von festem Fels über weichere, Wasser führende Schichten hin zu porösen Gesteinsmassen in der Regel alles beinhalten. Zudem können solche Erdbohrlöcher auch unter Meerwasser, wie auch in arktischen Regionen mit Permafrost gebohrt werden. Des Weiteren treten in der Regel bei Bohrungen ab etwa 1000 und mehr Metern erhöhte Temperaturen und Drücke auf.

Insbesondere bei der Öl- und Gasförderung wird in das gebohrte Loch normalerweise ein Stahlgehäuse in Form eines Rohres eingebracht, welches mit einer Zementbasierten Formulierung, welche zwischen die Gesteinsschichten und das eingebrachte Stahlgehäuse zu stehen kommt, fixiert wird. Unter anderem in diesem Zusammenhang wird der Begriff Ölquellen-Zementierung ("oil well cementing") verwendet. Darunter versteht man einen Oberbegriff, umfassend jegliche Art von Zementierung im Zusammenhang mit Öl- und Gasquellen und deren Förderung.

Allerdings gibt es eine Vielzahl verschiedenster Anwendungen mit jeweils anderen Anforderungen. Die dafür verwendeten zementären Formulierungen im Zusammenhang mit der Ölquellen-Zementierung können deshalb ganz unterschiedliche Zusammensetzungen aufweisen. Diese hängen unter anderem von der Gesteinsschicht, wie auch von den jeweils herrschenden Temperaturen und Drücken ab.

So wird beispielsweise an der Oberfläche des Bohrlochs in der Regel um das Stahlrohr herum ein weiteres, so genanntes Oberflächen-Gehäuse angebracht, welches ebenfalls mit einer zementären Masse befestigt wird. Beim so genannten "primary cementing" wird während oder direkt nach dem Bohren der Erdbohrlöcher das eingefügte Stahlgehäuse fixiert. Von "squeeze cementing" spricht man, wenn bestehende Erdbohrlöcher abgedichtet werden und unter "plug-back cementing" versteht man das Verschliessen und Abdichten eines Bohrlochs nach Abschluss der Ölförderung.

Um den unterschiedlichen Anforderungen gerecht zu werden, hat das American Petroleum Institute (API) neun verschiedene Zementsorten spezifiziert (API specification for Materials and Testing for Well Cements; API Spec. 10A, 22nd Edition, Jan. 1, 1995), die je nach auftretenden Temperaturen in den verschiedenen Bohrtiefen eingesetzt werden können. Zusätzlich gibt es noch weitere Spezialzemente, die je nach Anwendungs- und Anforderungsbereich zugelassen sind. Unter anderem sind dies Puzzolanische Zemente, Gips-haltige Zemente, Spezialzemente für den Einsatz in Permafrost Gebieten, reaktive Kunstharz-Zemente, Dieselöl-Zemente, expandierende Zemente, Leichtgewichtszemente wie auch Calcium-Aluminat-Zemente. Letztere werden bei Temperaturen bis etwa 1000°C und mehr eingesetzt, was sich speziell bei Abfackelungsanlagen und Feuersbrünsten als vorteilhaft erweist.

Damit die zementären Massen das jeweilige Anforderungsprofil erfüllen können, werden neben den jeweiligen Zementsorten verschiedene Formulierungshilsmittel zugesetzt, wobei oft verschiedene Klassen der jeweiligen Additive für unterschiedliche Anforderungen eingesetzt werden müssen. So wirken beispielsweise Celluloseether als Wasserretentionsmittel ("Fluid Loss Additive") nur unterhalb etwa 90 bis 95 °C. Bei höheren Temperaturen, welche in grösseren Bohrtiefen herrschen, müssen deshalb synthetisch hergestellte Wasserretentionsmittel eingesetzt werden.

Eine weitere Gruppe von Additiven sind wässrige Polymerdispersionen. Teilweise werden auch sie eingesetzt, um die Wasserretention in der noch nicht ausgehärteten Zementslurry zu verbessern. So wird in der WO 2006/066725 A1 ein Wasserretentionsmittel beschrieben, das den Flüssigkeitsverlust in Ölfeld-Flüssigkeiten und zementären Schlämmen reduziert, bestehend aus einem Styrol-Butadien-Latex und einem hochmolekularen, Wasser-löslichen Polymer. Trockenzementformulierungen, enthaltend ein polymeres Bindemittel, werden nicht erwähnt.

Polymerdispersionen werden auch verwendet, um die Wasserpenetration durch die abgebundene, zementbasierte Formulierung zu reduzieren oder sogar ganz zu verhindern. Des Weiteren werden sie gegebenenfalls eingesetzt, um die Penetration von Gasen ("gas channeling & gas migration") zu unterbinden. So beschreibt beispielsweise die US 4,537,918 und die EP 189'950 A1 Zementzusammensetzungen für die Ölquellen-Zementierung bei erhöhten Temperaturen bis etwa 250°C oder mehr, enthaltend einen Styrol-Butadien-Latex und einen Latex-Stabilisator, um das Koagulieren des Latex bei erhöhten Temperaturen zu verhindern. Durch die Zugabe des Latex-Stabilisators wird ein rechtwinkliges Abbindeverhalten ("right-angle-set") erreicht, was für diese Anwendung äusserst vorteilhaft ist. Trockenzementformulierungen, enthaltend ein polymeres Bindemittel, werden nicht erwähnt.

Zudem werden Polymerdispersionen auch eingesetzt, um die Flexibilität und Elastizität der abgebundenen Zementformulierung zu verbessern und/ oder um die Adhäsion zum Stahlrohr, wie auch zum Gestein des Bohrlochs zu verbessern.

Der Einsatz von Polymerdispersionen, die in der Regel in wässriger Form vorliegen, in Massen, enthaltend hydraulisch abbindenden Bindemitteln, wie beispielsweise Zement, hat jedoch verschiedene Nachteile. So können die Polymerdispersionen erst am Ort und zum Zeitpunkt der Wasserzugabe mit dem hydraulisch abbindenden Bindemittel vermischt werden, da letzteres sonst mit dem zugeführten Wasser abbindet. Dies macht die Dosierung komplizierter, müssen doch die drei verschiedenen Komponenten hydraulisch abbindendes Bindemittel, wässrige Polymerdispersion und Wasser zusammen so dosiert werden, dass nicht nur der Wasser/ Zementfaktor und somit die Konsistenz der angerührten zementären Masse, sondern auch der Polymer/ Zementfaktor richtig eingestellt ist. Ansonsten besteht die Gefahr von Schäden in der ausgehärteten Matrix. Zudem unterliegen wässrige Polymerdispersionen auch bestimmten Restriktionen bezüglich Lagerfähigkeit. So ist die Lagerdauer beschränkt und in kalten Regionen, wie beispielsweise in Gebieten mit Permafrost, muss auf die in der Regel stark eingeschränkte Frost-Tau Beständigkeit von wässrigen Dispersionen Rücksicht genommen werden, was zu erhöhten Lagerkosten durch beheizte Gebinde und/ oder beheizte Lagerhallen führt. Zudem muss immer auch das in der Dispersion enthaltene Wasser transportiert werden, was insbesondere dann einen grossen Nachteil bedeutet, wenn der Transport der Rohstoffe teuer ist, beispielsweise wenn Rohstoffe mittels Helikopter zum Einsatzort transportiert werden müssen.

In Wasser redispergierbare Polymer-Pulver haben sich aus den oben genannten Gründen in der Trockenmörtel-Industrie beispielsweise bei Fliesenklebern, Vollwärmeschutzmörteln, selbstverlaufende Fussbodenmassen und Reparaturmassen weitgehend durchgesetzt. Allerdings werden sie kaum und wenn dann nur sehr allgemein, im Zusammenhang mit Zementformulierungen für Erdbohrlöcher genannt. Der Grund mag in den ganz anderen Anforderungen und Art der Zementformulierungen liegen. Da letztere oft sehr hohe Anteile an Zement enthalten, erwartet der Fachmann, dass beim Anrühren mit Wasser die stark erhöhte lonogenität des Zementwassers die Redispergierbarkeit stark einschränken oder sogar ganz unterbinden kann. Zudem helfen bei den bekannten Trockenmörtelformulierungen die darin enthaltenen Füllstoffe, insbesondere Quarzsand, durch die beim Anrührprozess entstehenden Scherkräfte bei der Redispergierung solcher Pulver. Da bei der Ölquellen-Zementierung oft auch bei erhöhten Temperaturen gearbeitet wird, was die Notwendigkeit einer zusätzlichen Stabilisierung von wässrigen Polymerdispersionen zur Folge haben kann, erwartet der Fachmann, dass sich in Wasser redispergierbare Polymer-Pulver für einen generellen Einsatz bei der Ölquellen-Zementierung in aller Regel nicht oder nur sehr bedingt eignen, insbesondere weil die eingesetzten flüssigen Polymerdispersionen mittels Emulgatoren stabilisiert sind, während bei der Herstellung von in Wasser redispergierbaren Dispersionspulvern höhermolekulare Verbindungen, wie typischerweise wasserlösliche Schutzkolloide verwendet werden.

Die US 2005/092210 A1 beschreibt eine hydraulische Zementbeschichtung für ober- und unterirdische Bauwerke bestehend aus einer Trockenmörtel-Kompenente, welche auf etwa gleichen Teilen Zement und Sand basiert, und einer wässrigen BindemittelKomponente, welche auch durch Kombination eines Dispersionspulvers mit Wasser erhalten werden kann. Die WO 2006/094528 A1 beschreibt eine zementäre Mörtel Zusammensetzung, welche ein Trockenmörtel enthaltend ein Dispersionspulver sein kann, welche keine Ausblühungen zeigt und kein reaktives Siliziumdioxid enthält. Die Mörtelzusammensetzung basiert auf Portlandzement, Calcium-Aluminat Zement, Gips und in Wasser redispergierbares Polymerpulver, wobei auch grössere Mengen an Kalk und Sand eingesetzt werden. In beiden Schriften finden sich keinerlei Hinweise auf den Einsatz der Trockenmörtel zum Zementieren von Erdbohrlöchern. Auch wird der Einsatz von in Wasser redispergierbaren Polymerpulvern in zementären Mörteln oder der daraus erhaltenen Zementslurries bei erhöhten Temperaturen, wie sie beim Zementieren von Erdbohrlöchern auftreten können, nicht genannt.

Die US 6'391'952 B1 beschreibt ein in Wasser redispergierbares Pulver, bestehend aus einem wasserunlöslichen filmbildenden Polymer, weiches in Gegenwart von mindestens einem ethylenisch ungesättigten Monomer und von mindestens einem speziellen Naphthalinsulfonat hergestellt wurde. Das erhaltene Pulver kann in Fugenmassen für die Zementierung von Ölquellen verwendet werden. In der WO 200540253 A1 wird eine Methode zur Herstellung von Dispersionen mit einer modifizierten Oberfläche beschrieben, wobei die Dispersion mit anionischen Gruppen mit einem Zwei-Block-Copolymer, enthaltend eine neutrale oder anionische sowie eine kationische Gruppe, vermischt wird. Diese Mischung kann nachfolgend zu einem redispergierbaren Pulver versprüht werden. Unter anderem wird sehr allgemein die Verwendung dieses Pulvers in angerührten Massen für die Zementierung von Erdölbohrlöchern beschrieben werden. Nähere Angaben wie einsetzbarer Temperaturbereich, Anwendungsgebiet und/ oder Zusammensetzung der Massen werden nicht gemacht. Es wird auch nicht erwähnt, ob das redispergierbare Pulver vorgängig mit Wasser redispergiert oder in einer Trockenzementformulierung eingesetzt wird.

Somit stellt sich die Aufgabe, die Nachteile des Standes der Technik zu vermeiden, wobei insbesondere eine Formulierung bereit gestellt werden soll, anhand der ohne grösseren Aufwand Polymer-modifizierte Formulierungen hergestellt und deren Wasser/ Zementfaktor und Polymer/ Zementfaktor auf einfache Weise vorteilhaft eingestellt werden können. Zudem sollen diese Polymer-modifizierte Zementformulierungen auch bei erhöhten Temperaturen eingesetzt werden können.

Diese Aufgabe konnte überraschenderweise durch eine Trockenzementformulierung zum Zementieren von Erdbohrlöchern, insbesondere von Öl-, Gas- und/ oder Erdwärme-Bohrlöchern, gelöst werden, bestehend aus
a) 20 bis 99.9 Gew.-% Zement,
b) 0 bis 65 Gew.-% Quarzmehl und/ oder Quarzstaub,
c) 0.1 bis 30 Gew.-% in Wasser redispergierbares Dispersionspulver, sowie
d) 0 bis 20 Gew.-% weitere Additive.

Insbesondere bei Öl- und Gasbohrlöchern ist es hilfreich, wenn die eingesetzten Zementsorten den Anforderungen des American Petroleum Institute genügen. So soll für diese Einsatzgebiete mindestens ein Zement ein API Zement der Klassen A bis J enthalten, welche je nach den spezifischen Anforderungen des Bohrlochs, wie beispielsweise anhand der in der jeweiligen Tiefe des Bohrlochs vorherrschende Temperatur und/ oder Druck ausgewählt wird. Generell bevorzugte API Zementklassen sind die Klassen A, B, C, G und H, wobei die Klassen G and H speziell bevorzugt sind. Nähere Angaben zu den Zementklassen finden sich in der API specification 10A, 22nd Edition vom 1. Januar 1995 des American Petroleum Institutes. Zudem können auch Spezialzemente, wie Puzzolanische Zemente, Gips-Zemente, Permafrost-Zemente, Resin- und Plastic- Zemente, Dieselöl-Zements, expandierende Zemente, Calcium-Aluminat-Zemente, wie auch geschäumte Zemente eingesetzt werden. Als Spezialzemente werden speziell bevorzugt Puzzolanische Zemente, Permafrost-Zemente, Resin- und Plastic- Zemente, wie auch expandierende Zemente.

Als Quarzmehl und/ oder Quarzstaub können amorphe, kristalline wie auch teilkristalline Quarze eingesetzt werden, die gegebenenfalls auch modifiziert sein können. Erfindungsgemäss einsetzbare Quarze sind Quarzmehle, Quarzstäube, natürliche und/ oder synthetisch hergestellte Kieselsäuren, wie beispielsweise gefällte Kieselsäuren. Des Weiteren fallen erfindungsgemäss unter anderem auch Silikate, Schichtsilikate, Alumosilikate, Siliziumoxid, Siliziumdioxid, Aluminium-Siliziumoxid, Calcium-Silikathydrat, Aluminium-Silikat, Magnesium-Silikat, Aluminium-Silikathydrat, Calcium-Aluminium-Silikat, Calcium-Silikathydrat und/ oder Aluminium-Eisen-Magnesium-Silikat darunter. Zudem kann auch feiner Quarzsand eingesetzt werden. Generell ist es jedoch in der Regel von grossem Vorteil, wenn der Siebrückstand des jeweiligen Quarzes nach dem Sieben durch ein 400 µm Sieb, bevorzugt durch ein 250 µm Sieb, insbesondere durch ein 160 µm Sieb, höchstens etwa 5 Gew.-% beträgt.

Quarzmehle und/ oder Quarzstäube werden insbesondere dann eingesetzt, wenn die Erdbohrloch-Temperatur etwa 70°C und höher, insbesondere etwa 100°C und höher ist, wobei je höher die Temperatur, desto grösser der Anteil an Quarzmehl und/ oder Quarzstaub sein soll. Beispielsweise kann der Gehalt an Quarzmehl und/ oder Quarzstaub bei 100°C etwa bei 10 Gew.-% und bei 130°C etwa zwischen 20 und 60 Gew.-%, bevorzugt etwa zwischen 30 und 50 Gew.-%, liegen. Bei dieser Temperatur kann der Gehalt an Zement bei 130°C etwa zwischen 20 und 80 Gew.-%, bevorzugt zwischen etwa 30 und 70 Gew.-%, insbesondere zwischen etwa 40 und 70 Gew.-%, der Gehalt an in Wasser redispergierbarem Dispersionspulver bei 130°C zwischen etwa 0.1 und 30 Gew.-%, bevorzugt zwischen etwa 1 und 20 Gew.-%, und der Gehalt an weiteren Additiven zwischen etwa 0 bis 20 Gew.-%, bevorzugt zwischen etwa 1 bis 15 Gew.-%, betragen.

Ist die Temperatur im Erdbohrloch etwa 100°C oder niedriger, können Quarzmehle und/ oder Quarzstäube ganz weggelassen werden. Eine Trockenzementformulierung für diesen Temperaturbereich besteht bevorzugt aus etwa 50 bis 99.9 Gew.-%, insbesondere aus etwa 70 bis 99 Gew.-% Zement, etwa 0.1 bis 30 Gew.-%, bevorzugt aus etwa 0.5 bis 20 Gew.-% in Wasser redispergierbarem Dispersionspulver sowie aus etwa 0 bis 20 Gew.-%, bevorzugt etwa 0.5 bis 10 Gew.-% weiteren Additiven.

Der Gehalt am in Wasser redispergierbaren Dispersionspulver beträgt je nach Anforderungen an die ausgehärtete Zementformulierung, wie beispielsweise bezüglich Flexibilität, Biegezug- und Druckfestigkeit, Adhäsion und/ oder Reduktion der Gas- und/ oder Wasserpenetration etwa 0.1 bis 30 Gew.-%, bevorzugt etwa 0.5 bis 20 Gew.-%, insbesondere etwa 2 bis 15 Gew.-%, bezogen auf die Trockenzementformulierung.

Das in Wasser redispergierbare Dispersionspulver wird durch Trocknung von bevorzugt wässrigen Dispersionen hergestellt. Die Trocknung erfolgt bevorzugt mittels Sprühtrocknung, Gefriertrocknung, Fliessbetttrocknung, Walzentrocknung und/ oder Schnelltrocknung, wobei Sprühtrocknung besonders bevorzugt ist.

Vor der Trocknung wird der zu trocknenden Dispersion in der Regel einen Anteil an wasserlöslichem Polymer zugegeben, welches die Redispersion erleichtern kann. Das wasserlösliche Polymer kann non-ionischen oder ionischen Charakter haben. Oft ist es von Vorteil, wenn der Anteil dieses wasserlöslichen Polymers nicht zu hoch ist. Bevorzugt sind Gehalte von 10 Gew.-% oder weniger, insbesondere von 5 Gew.-% oder weniger, bezogen auf den Feststoffanteil der Dispersion. Er kann auch ganz weggelassen werden.

Die zu trocknende Dispersion kann mittels Emulsionspolymerisation, Suspensionspolymerisation, Mikroemulsionspolymerisation und/ oder inverser Emulsionspolymerisation hergestellt werden, wobei das Polymerisat gegebenenfalls auch eine heterogene Morphologie aufweisen kann, welche durch die Wahl der Monomere und des Herstellverfahrens erhalten wird. Es können auch unterschiedliche Polymerisate zusammengemischt werden und als Mischung gemeinsam getrocknet werden.

Als Stabilisierungssystem der so hergestellten Polymerisate dienen bevorzugt ein oder mehrere höhermolekulare Verbindungen. Die Einsatzmenge dieser Stabilisierungssysteme beträgt, bezogen auf den Feststoffanteil der Dispersion, je nach Art des Stabilisierungssystems etwa 1 bis 50 Gew.-%, insbesondere etwa 3 bis 30 Gew.-%. Bei wasserlöslichen synthetischen Stabilisierungssystemen beträgt er in der Regel 1 bis 20 Gew.-%, bevorzugt etwa 3 bis 15 Gew.-%, und bei wasserunlöslichen Stabilisierungssytemen beträgt er etwa 5 bis 50 Gew.-%, bevorzugt etwa 10 bis 40 Gew.-%, insbesondere etwa 15 bis 30 Gew.-%.

Typische wasserlösliche organische polymere Stabilisierungssysteme sind bevorzugt höhermolekulare Verbindungen. Darunter fallen natürliche Verbindungen, wie Polysaccharide, welche gegebenenfalls chemisch modifiziert sind, synthetische höhermolekulare Oligomere sowie Polymerisate die nicht oder nur schwach ionischen Charakter haben und/ oder Polymerisate, welche mittels Monomeren, die zumindest zum Teil ionischen Charakter haben und beispielsweise mittels radikalischer Polymerisation in wässrigem Medium in-situ hergestellt werden. Es ist auch möglich, dass nur ein Stabilisierungssystem verwendet wird oder verschiedene Stabilisierungssysteme miteinander kombiniert werden.

Bevorzugt einsetzbare Polysaccharide und deren Derivate sind kaltwasserlösliche Polysaccharide und Polysaccharidether, wie Celluloseether, Stärkeether (Amylose und/ oder Amylopectin und/ oder deren Derivate), Guarether und/ oder Dextrine. Es können auch synthetische Polysaccharide, wie anionische, nonionische oder kationische Heteropolysaccharide, insbesondere Xanthan Gum oder Wellan Gum verwendet werden. Die Polysaccharide können, müssen aber nicht, chemisch modifiziert sein, beispielsweise mit Carboxymethyl-, Carboxyethyl-, Hydroxyethyl-, Hydroxypropyl-, Methyl-, Ethyl-, Propyl- und/ oder langkettigen Alkylgruppen. Weitere natürliche Stabilisierungssysteme sind Alginate, Peptide und/ oder Proteine, wie beispielsweise Gelatine, Casein und/ oder Soja-Protein. Ganz besonders bevorzugt sind Dextrine, Stärke, Stärkeether, Casein, Soja-Protein, Hydroxyalkyl-Cellulose und/ oder Alkyl-Hydroxyalkyl-Cellulose.

Synthetische Stabilisierungssysteme sind beispielsweise ein oder mehrere Polyvinylpyrrolidone und/ oder Polyvinylacetale mit Molekulargewichten von 2000 bis 400'000, voll- oder teilverseifte und/ oder modifizierte voll- oder teilverseifte Polyvinylalkohole mit einem Hydrolysegrad von bevorzugt etwa 70 bis 100 Mol-%, insbesondere von etwa 80 bis 98 Mol-%, und einer Höpplerviskosität in 4%iger wässriger Lösung von bevorzugt 1 bis 50 mPas, insbesondere von etwa 3 bis 40 mPas (gemessen bei 20°C nach DIN 53015) sowie Melaminformaldehydsulfonate, Naphthalinformaldehydsulfonate, Blockcopolymerisate von Propylenoxid und Ethylenoxid, Styrol-Maleinsäure- und/ oder Vinylether-Maleinsäure-Copolymerisate. Höhermolekulare Oligomere können nicht-ionische, anionische, kationische und/ oder amphotere Emulgatoren sein, wie beispielsweise Alkylsulfonate, Alkylarylsulfonate, Alkylsulfate, Sulfate von Hydroxylalkanolen, Alkyl- und Alkylaryldisulfonate, sulfonierte Fettsäuren, Sulfate und Phosphate von polyethoxylierten Alkanolen und Alkylphenolen sowie Ester von Sulfobernsteinsäure, quarternäre Alkylammonium-Salze, quarternäre Alkylphosphonium-Salze, Polyadditionsprodukte, wie Polyalkoxylate, beispielsweise Addukte von 5 bis 50 Mol Ethylenoxid und/ oder Propylenoxid pro Mol an lineare und/ oder verzweigte C₆- bis C₂₂-Alkanole, Alkylphenole, höhere Fettsäuren, höhere Fettsäureamine, primäre und/ oder sekundäre höhere Alkyl-Amine, wobei die Alkylgruppe jeweils bevorzugt eine lineare und/ oder verzweigte C₆- bis C₂₂-Alkylgruppe ist.

Typische wasserunlösliche organische polymere Stabilisierungssysteme sind Stabilisierungssysteme, welche mit olefinisch ungesättigten Monomeren hergestellt werden und welche mindestens ein ionisches, ungesättigtes Monomer enthalten. Diese Stabilisierungssysteme können kationischer, anionischer und/ oder amphoterer Natur sein. Ganz besonders bevorzugt ist, wenn solche Systeme in-situ erhalten werden und/ oder wasserunlöslich sind, wobei als Monomere mit einer ionischen Gruppe beispielsweise (Meth-)acrylsäure, Monomere mit Sulfonsäuregruppen und/ oder kationische Monomere eingesetzt werden können, wie zum Beispiel in EP 1'098'916 A1 und EP 1'109'838 A1 beschrieben ist.

Des Weiteren können auch Carboxylgruppen-haltige Polymere auf Basis von Mono- und/ oder Dicarbonsäuren oder deren Anhydride, wie beispielsweise Polyacrylsäuren, als Stabilisierungssysteme eingesetzt werden. Allerdings ist darauf zu achten, dass die Menge eines solchen Stabilisierungssystems und/ oder der eingesetzten Menge an in Wasser redispergierbarem Dispersionspulver nicht zu gross gewählt wird, um die Hydratation des mineralischen Bindemittels sowie dessen Verarbeitung nicht zu stark negativ zu beeinflussen.

Es ist bevorzugt, wenn bei der Herstellung der Dispersionen keine Emulgatoren oder nur in einem Anteil von weniger als etwa 3 Gew.-%, bevorzugt von weniger als etwa 2 Gew.-%, insbesondere von weniger als etwa 1 Gew.-% Emulgatoren, bezogen auf den Monomeranteil des in Wasser redispergierbaren Dispersionspulvers, eingesetzt werden.

Die zur Herstellung von in Wasser redispergierbaren Dispersionspulver bevorzugt verwendeten Dispersionen beruhen auf einer oder mehreren Dispersionen auf Basis von Vinylacetat, Ethylen-Vinylacetat, Ethylen-Vinylacetat-Vinylversatat, Ethylen-Vinylacetat-Vinylchlorid, Ethylen-Vinylchlorid, Vinyl-acetat-Vinylversatat, Rein(Meth-) Acrylat, Ethylen-Vinylacetat-(Meth-)Acrylat, Vinylacetat-Vinylversatat-(Meth-)Acrylat, Vinylacetat-Maleinsäure und Vinylacetat-Maleinsäureester, Vinylacetat-Vinylversatat-Maleinsäure und Vinylacetat-Vinylversatat-Maleinsäureester, Vinylacetat-(Meth-) Acrylat-Maleinsäure und Vinylacetat-(Meth-)Acrylat-Maleinsäureester, Styrol-Acrylat und/ oder Styrol-Butadien, wobei Styrol-Butadien-, Styrol-Acrylat-, Reinacrylat- und/ oder Vinylversatat-Acrylat-Copolymer - Dispersionen besonders bevorzugt sind, und wobei Vinylversatat ein C₄- bis C₁₂- Vinylester ist, und die Polymerisate etwa 0 - 50 Gew.-%, insbesondere etwa 0 - 30 Gew.-% und ganz besonders bevorzugt etwa 0 - 10 Gew.-% an weiteren Monomeren, insbesondere solche mit funktionellen Gruppen, enthalten können.

Geeignete Monomere und Monomerklassen zur Herstellung dieser Dispersionen sind zum Beispiel lineare oder verzweigte C₁- bis C₂₀- Vinylester, Ethylen, Propylen, Vinylchlorid, (Meth-) Acrylsäure und deren lineare oder verzweigte C₁- bis C₂₀-Alkylester, (Meth-)Acrylamid und (Meth-)Acrylamid mit N-substituierten linearen oder verzweigten C₁- bis C₂₀- Alkylgruppen, Acrylnitril, Styrol, Styrol-Derivate und/ oder Diene, wie beispielsweise 1,3-Butadien. Bevorzugte Vinylester sind lineare oder verzweigte C₁- bis C₁₂- Vinylester, wie beispielsweise Vinylacetat, Vinylstearat, Vinylformiat, Vinylpropionat, Vinylbutyrat, Vinylpivalat, Vinyllaurat, Vinyl-2-ethylhexanoat, 1-Methylvinylacetat und/ oder C₉-, C₁₀- und/ oder C₁₁- Vinylversatat, Vinylpyrrolidon, N-Vinylformamid, N-Vinylacetamid sowie Vinylester der Benzoesäure und p-tert-Butylbenzoesäure, wobei insbesondere Vinylacetat, Vinyllaurat und/ oder Vinylversatat bevorzugt sind. Bevorzugte C₁- bis C₁₂- Alkylgruppen der (Meth-)Acrylsäureester und N-substituierten (Meth-)Acrylamide sind Methyl-, Ethyl-, Propyl-, n-Butyl-, i-Butyl-, t-Butyl-, Hexyl-, Cyclohexyl-, 2-Ethylhexyl-, Lauryl-, Stearyl-, Norbornyl-, Polyalkylenoxid- und/ oder Polyalkylenglykolgruppen, insbesondere Methyl-, Butyl-, 2-Ethylhexyl-gruppen. Insbesondere sind Methylmethacrylat, n-Butylacrylat, t-Butylmethacrylat und 2-Ethylhexylmethacrylat bevorzugt. Zudem können weitere Monomere, insbesondere Monomere mit funktionellen Gruppen einpolymerisiert werden. Beispielsweise können Maleinsäureanhydrid, ungesättigte Dicarbonsäuren und deren verzweigte oder lineare C₁- bis C₂₀- Ester, insbesondere Itaconsäure, Maleinsäure und/ oder Fumarsäure sowie deren Ester, mehrfach ethylenisch ungesättigte Comonomere, wie beispielsweise Divinyladipat, Diallylmaleat, Allylmethacrylat oder Triallylcyanurat, Divinylbenzol, Butandiol-1,4-dimethacrylat, Triethylenglykoldimethacrylat, Hexandiol-diacrylat, funktionelle Vinyl- und/ oder (Meth-)Acrylat Monomere enthaltend Alkoxysilan-, Epihalohydrin-, Glycidyl-, Carboxyl-, Amin-, Hydroxyl- Ammonium- und/ oder Sulfonsäuregruppen copolymerisiert werden. Bevorzugte funktionelle Monomere sind Hydroxypropyl(meth-)acrylat, N-Methylolallylcarbamat, Glycidyl(meth-)acrylat, Methyl-acrylamidoglykolsäuremethylester, N-Methylol(meth-)acrylamid, Acrylamidoglykolsäure, 2-Acrylamido-2-methylpropansulfonsäure, Styrolsulfonsäure, (Meth-)Acrylsäure-Sulfoalkylester, Itaconsäure-Sulfoalkylester, vorzugsweise jeweils als C₁- bis C₆- Alkylester, Vinylsulfonsäure und deren Alkali-, Erdalkali- und/ oder Ammoniumsalze, (Meth-)Acryloxypropyl-tri(alkoxy)silan, Vinyltrialkoxysilan, Vinylmethyldialkoxysilane, wobei als Alkoxygruppen bevorzugt Methoxy-, Ethoxy- und/ oder iso-Propoxygruppen verwendet werden, Acetylacetoxyethyl(meth-)acrylat, Diacetonacrylamid, Acrylamidoglycolsäure, Methylacrylamidoglykolsäuremethylester, N-Methylol(meth-)acrylamid, N-Methylolallylcarbamat, Alkylether, Ester des N-Methylol(meth-)acrylamids und des N-Methylolallylcarbamats, N-[3-(Dimethylamino)-propyl]methacrylamid, N-[3-(Dimethylamino)ethyl]methacrylat, N-[3-(Trimethyl-ammonium)propyl]methacrylamidchlorid und/ oder N,N-[3-Chloro-2-hydroxypropyl)-3-dimethylammoniumpropyl](meth-)acrylamidchlorid. Der Anteil dieser Comonomere beträgt, bezogen auf den Gesamtmonomeranteil, bevorzugt etwa 0 bis 30 Gew.-%, insbesondere etwa 0 bis 20 Gew.-% und ganz besonders bevorzugt etwa 0.1 bis 10 Gew.-%, wobei darauf geachtet werden soll, dass der Anteil an freien Carboxylgruppen bevorzugt nicht höher als etwa 10 Gew.-%, insbesondere nicht höher als etwa 5 Gew.-%, und ganz besonders bevorzugt nicht höher als etwa 3 Gew.-% ist.

In der Regel ist es bevorzugt, wenn das in Wasser redispergierbare Dispersionspulver auf einer wässrigen, ionische Gruppen enthaltenden Dispersion beruht. Diese ionische Gruppe kann Teil des Stabilisierungssystems sein und/ oder von copolymerisierten ionischen Monomeren herrühren. In einer speziellen Ausführungsform stammen die ionischen Gruppen von olefinisch ungesättigten Monomeren, mit welchen das Stabilisierungssystem gebildet wird. Dabei ist es auch möglich, dass die ionischen Gruppen sich erst im alkalischen pH Bereich durch Deprotonierung von entsprechenden Säuregruppen ausbilden.

Diese ionische Gruppen enthaltenden Dispersionen besitzen im elektrischen Feld ein Zetapotential. Es ist nicht notwendig, dass dieses stark ausgeprägt ist. Daher genügt ein Zetapotential von etwa -2.5 mV oder weniger, insbesondere von etwa -5 mV oder weniger, oder von +5 mV oder mehr, insbesondere von +10 mV oder mehr, besitzt.

Die Wahl bezüglich des zur Polymerisation notwendigen Initiatorsystems unterliegt keinerlei Einschränkungen. So können alle bekannten Initiatorsysteme verwendet werden, wie Redoxinitiatoren, thermische Initiatoren und/ oder katalytisch wirkende Initiator Systeme.

Zur vorteilhaften Ausführung der Erfindung ist es wichtig, dass die Glasübergangstemperatur T_{g} des Emulsionspolymerisates innerhalb von etwa -60°C bis 80°C, bevorzugt etwa -30°C bis 60°C und ganz besonders bevorzugt etwa -20°C bis 50°C liegt, so dass das Polymerisat bei den Anwendungsbedingungen filmbildende Eigenschaften aufweist.

Aus den eingesetzten Monomeren lässt sich jeweils die Glasübergangstemperatur T_{g} der hergestellten Copolymerisate und somit der Emulsionspolymerisate sowohl empirisch berechnen wie auch experimentell bestimmen. Anhand der bekannten Fox Gleichung (T.G. Fox, Bull. Am. Phy. Soc. (serll) 1, 123 (1956) und Ullmann's Enzyklopädie der Technischen Chemie, Bd. 19, 4. Auflage, Verlag Chemie, Weinheim, 1980, S. 17/ 18) können sie empirisch berechnet werden: 1/ T_{g} = x_{A}/ T_{gA} + x_{B}/ T_{gB} + ..... + xₙ/ T_{gn}, wobei x_{A}, x_{B} .... die Massenbrüche der eingesetzten Monomere A, B, ... (in Gew.-%) und T_{gA}, T_{gB}, .... die Glasübergangstemperaturen T_{g} in Kelvin der jeweiligen Homopolymerisate von A, B, ... sind. Diese sind beispielsweise in Ullmann's Encyclopedia of Industrial Chemistry, VCH, Weinheim, Vol. A21 (1992), S. 169 aufgelistet. Eine andere Möglichkeit, die Glasübergangstemperaturen T_{g} der Copolymerisate zu bestimmen, ist die experimentelle Bestimmung, beispielsweise mittels DSC, wobei die Mitteltemperatur herangezogen werden soll (midpoint temperature gemäss ASTM D3418-82).

Den erfindungsgemäss einsetzbaren in Wasser redispergierbaren Dispersionspulvern kann ein Filmbildehilfsmittel und/ oder ein Koalesziermittel zugegeben werden, wobei der Anteil bevorzugt etwa 0 bis 5 Gew.-%, insbesondere etwa 0 bis 2 Gew.-%, bezogen auf den Copolymerisatgehalt, beträgt.

Sehr vorteilhaft sind in Wasser redispergierbare Dispersionspulver mit einem niedrigen Anteil an organischen flüchtigen Komponenten (VOC), wobei als solche gelten, welche einen Siedepunkt von weniger als 250°C bei Normaldruck besitzen. Dazu gehören beispielsweise nicht reagierte Monomere und nicht polymerisierbare in den Monomeren enthaltene Verunreinigungen und Nebenprodukte der Polymerisation. Der VOC-Gehalt in den in Wasser redispergierbaren Dispersionspulvern beträgt weniger als etwa 5000 ppm, bevorzugt weniger als etwa 2000 ppm, insbesondere weniger als etwa 1000 ppm, und ganz besonders bevorzugt weniger als etwa 500 ppm, bezogen auf den Polymerisatgehalt.

Es können auch weitere Komponenten, wie Additive, zu den in Wasser redispergierbaren Dispersionspulver gegeben werden, wobei die Zugabe vor, während und/ oder nach der Trocknung erfolgen kann. Prinzipiell sind der Art der Komponenten keine Grenzen gesetzt. Flüssige Komponenten werden bevorzugt vor oder während der Trocknung zugegeben, können aber auch nachträglich auf das Pulver gesprüht werden. Pulverförmige Komponenten werden bevorzugt während oder nach der Sprühtrocknung zugegeben, können aber auch der Dispersionsmischung vor dem Trocknungsschritt zugegeben werden. Es ist auch möglich, Additive, welche ansonsten separat der Zementformulierung zugegeben werden, dem in Wasser redispergierbaren Dispersionspulver direkt zuzugeben, was in der Anwendung das Mischen, aber auch die ganzen logistischen Abläufe, wie beispielsweise die Lagerhaltung, einfacher macht.

Überraschenderweise wurde gefunden, dass die erfinderische Trockenzementformulierung eine erhöhte Temperaturbeständigkeit aufweist. Dies ist besonders der Fall, wenn das in Wasser redispergierbare Dispersionspulver auf einer wässrigen, ionische Gruppen enthaltenden Dispersion beruht, insbesondere wenn die ionischen Gruppen von copolymerisierten ionischen Monomeren herrühren. So weisen diese Trockenzementformulierung, nachdem sie mit Wasser angerührt wurden, auch bei Temperaturen von bis zu 90°C und höher, bevorzugt von bis zu 130°C und höher, eine gute Verarbeitbarkeit auf.

Zudem beträgt der Wasserverlust, gemessen nach API Specification 10, 5th Edition, July 1, 1990 des American Petroleum Institutes (API Specification for Materials and Testing for Well Cements) bei etwa +50°C und höher, bevorzugt von etwa +70°C und höher, insbesondere von etwa +90°C und höher, zweckmässigerweise weniger als etwa 100 ml/ 30 min, bevorzugt weniger als etwa 75 ml/ 30 min, insbesondere weniger als etwa 50 ml/ 30 min.

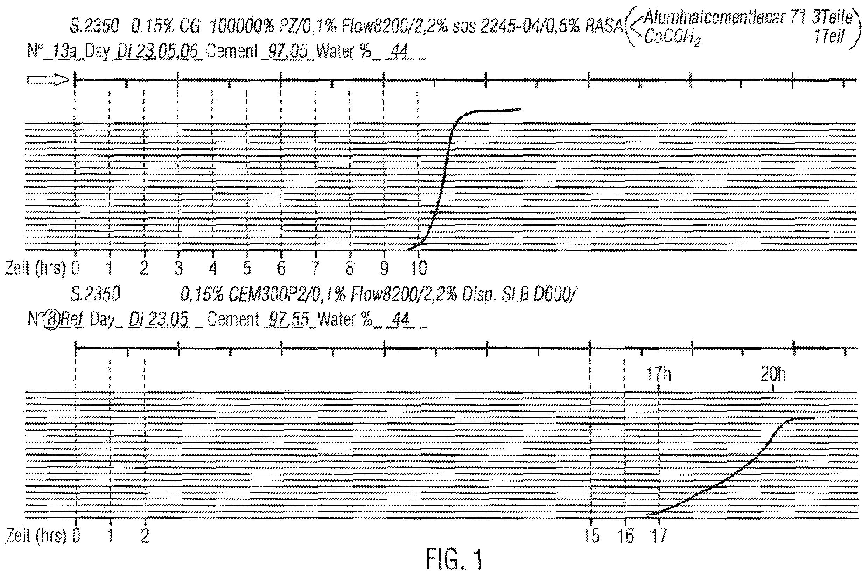

Des Weiteren weist die mit Wasser angerührte Trockenzementformulierung bei einer Temperatur von etwa +30°C und höher, bevorzugt von etwa +50°C und höher, insbesondere von etwa +70°C, und ganz besonders bevorzugt von etwa +90°C und höher, ein im Wesentlichen rechtwinkliges Abbindeverhalten aufweist. Dies ist insbesondere dann äusserst wünschenswert, wenn auch bei erhöhten Temperaturen über eine bestimmte Zeitspanne, die mittels Abbindebeschleuniger oder Abbindeverzögerer eingestellt werden kann, eine niedrige Viskosität gefordert wird, so dass die erhaltene Zementslurry gut pumpbar und verarbeitbar bleibt. Beginnt jedoch der Abbindeprozess, erhärtet die Zementslurry innerhalb einer kurzen Zeit, beispielsweise innerhalb von wenigen Minuten. Siehe dazu auch Fig. 1 bis 3.

Der Trockenzementformulierung können auch weitere Additive zugegeben werden, um die jeweils notwendigen Eigenschaftsprofile einzustellen. Bevorzugt sind Dispergiermittel, Stabilisatoren, Zementverflüssiger, Additive zur Steuerung der Zementhydratation, insbesondere Abbindeverzögerer, ionische und non-ionische Wasserretentionsmittel, wie synthetische Polymere auf Basis von Sulfat- und/ oder Sulfonatgruppen enthaltenden Monomeren und/ oder Polysaccharidethern, wie Cellulose- oder Guarether, Mittel zur Reduktion von Ausblühungen, insbesondere auf Basis von Naturharzen, Entschäumern, Fasern, Flugasche, feinen carbonatischen Sanden und/ oder Mehlen, wie beispielsweise Kalksteinmehl, Carbonate und/ oder Kreide, Silikate und/ oder Aluminiumsilikate. Zudem können auch latent hydraulische Bindemittel, beispielsweise Puzzolane, wie Metakaolin, Calciummetasilikat und/ oder vulkanische Schlacke, vulkanischer Tuff, Flugasche, Hochofenschlacke und/ oder Silicastaub eingesetzt werden, welche zusammen mit einer Calciumquelle, wie Calciumhydroxid und/ oder Zement hydraulisch reagieren.

Als Dispergiermittel, Stabilisatoren und/ oder Zementverflüssiger eignen sich Formaldehyd Kondensationsprodukte, wie Melamin-, Naphthalin-, Phenol- und/ oder Aceton-Formaldehyd Kondensate, welche in der Regel mit Schwefliger Säure, Sulfonsäure und/ oder Sulfit-Salz modifiziert sind. Des Weiteren können Ligninsulfonate und deren entsulfierte Derivate, Polycarboxylat-Ether, wie z.B. Maleinsäure/ Acrylsäure Copolymere mit einem mittleren Molekulargewicht M_{w} von etwa 4000 bis 200'000, Maleinsäure/ Vinylether Copolymere mit einem mittleren Molekulargewicht M_{w} von etwa 4000 bis 200'000 und/ oder Maleinsäure/ 2-Hydroxypropylacrylat Copolymere mit einem mittleren Molekulargewicht M_{w} von etwa 1000 bis 20'000 sowie Polyacrylsäure und deren Copolymere mit einem mittleren Molekulargewicht M_{w} von etwa 500 bis 250'000 eingesetzt werden.

Der Anteil der weiteren Additive kann, bezogen auf die Trockenzementformulierung, beispielsweise für grenzflächenaktive Substanzen sehr klein sein und im Rahmen von etwa 0.01 Gew.-% oder mehr, insbesondere etwa 0.1 Gew.-% und mehr liegen, soll jedoch in der Regel etwa 5 Gew.-%, insbesondere etwa 3 Gew.-% nicht übersteigen. Andererseits kann der Anteil an Wasserretentionsmitteln höher sein, soll jedoch nicht mehr als etwa 15 Gew.-%, bevorzugt nicht mehr als etwa 10 Gew.-% und insbesondere nicht mehr als etwa 7 Gew.-% betragen.

Es ist von grossem Vorteil, wenn die Trockenzementformulierung keinen wesentlichen Anteil an grösseren Feststoffpartikeln enthält. So ist es in der Regel bevorzugt, wenn der Siebrückstand der Trockenzementformulierung nach deren Sieben durch ein 400 µm Sieb, bevorzugt durch ein 250 µm Sieb, insbesondere durch ein 160 µm Sieb, höchstens etwa 5 Gew.-% beträgt.

Die erfinderische Trockenzementformulierung wird bevorzugt zum Herstellen einer Zementslurry zum Zementieren von Erdbohrlöchern verwendet. Diese Zementslurry wird durch Vermischen der Trockenformulierung mit Wasser erhalten und bevorzugt während oder direkt nach dem Bohren der Erdbohrlöcher und/ oder zum Abdichten bestehender Erdbohrlöcher verwendet. Eine weitere bevorzugte Verwendung der durch Vermischen der Trockenformulierung mit Wasser hergestellten Zementslurry dient der Reduktion der Gas- und/ oder Wasserpenetration und/ oder dem Abdichten der Gas- und/ oder Wasserkanäle durch die ins Bohrloch eingebrachte und ausgehärtete Zementslurry.

Das in der Trockenformulierung verwendete in Wasser redispergierbare Dispersionspulver kann zudem auch zuerst in Wasser redispergiert und als Redispersion einer Trockenformulierung zugegeben werden, welche noch kein oder nur einen Teil an in Wasser redispergierbarem Dispersionspulver enthält. Zudem ist es auch möglich, dass gegebenenfalls eine andere Zementformulierung verwendet werden kann. Auch in einer in dieser Weise erhaltenen Zementslurry kann das in Wasser redispergierbare Dispersionspulver zur Reduktion der Gas- und/ oder Wasserpenetration und/ oder zum Abdichten der Gas- und/ oder Wasserkanäle durch die in Erdbohrlöcher, insbesondere in Öl-, Gas- und/ oder Erdwärme-Bohrlöcher eingebrachte und ausgehärtete Zementslurry verwendet werden.

Insbesondere wenn das in Wasser redispergierbare Dispersionspulver auf einer wässrigen, ionische Gruppen enthaltenden Dispersion beruht, wobei die ionischen Gruppen insbesondere von copolymerisierten ionischen Monomeren herrühren, eignet sich das in Wasser redispergierbare Dispersionspulver in einer Zementslurry zum Zementieren von Erdbohrlöchern, insbesondere von Öl-, Gas- und/ oder Erdwärme-Bohrlöchern, bei Erdbohrlochtemperaturen von etwa +30°C oder höher, bevorzugt von +50°C und höher, insbesondere von +70°C und höher, und ganz besonders bevorzugt von +90°C und höher. Eine weitere bevorzugte Verwendung des in Wasser redispergierbaren Dispersionspulvers in einer Zementslurry dient der Reduktion des Wasserverlusts der Zementslurry, wobei der Wasserverlust nach API Specification 10 bei etwa +50°C und höher, bevorzugt von etwa +70°C und höher, insbesondere von etwa +90°C und höher, weniger als etwa 100 ml/ 30 min, bevorzugt weniger als etwa 75 ml/ 30 min, insbesondere weniger als etwa 50 ml/ 30 min beträgt.

Die vorliegende Erfindung bietet viele Vorteile. Durch den Einsatz von in Wasser redispergierbaren Dispersionspulvern muss nicht Wasser zum Einsatzort transportiert werden, wie dies bei der Verwendung von wässrigen Dispersionen oder Latices der Fall ist. Dies spielt insbesondere bei der Anwendung bei Erdgas- und Ölplattformen eine wichtige Rolle, wo die Rohstoffe in der Regel mittels Helikopter hingeflogen werden. Zudem ist bei den in Wasser redispergierbaren Dispersionspulvern die Frost-Tau-Beständigkeit, wie auch eine längere Haltbarkeit der Dispersionspulver ohne Biozide gewährleistet. Des Weiteren wird der Mischprozess stark vereinfacht, indem nur die Polymer-modifizierten Trockenzementformulierungen mit Wasser vermischt werden müssen, wobei es auch möglich ist, die Dispersionspulver zuerst in Wasser zu redispergieren und als Redispersion mit der Zementformulierung zu vermischen. Als Wasserquelle kann Süsswasser, Salzwasser oder eine andere Wasserquelle verwendet werden.

Die Erfindung wird anhand der nachfolgenden Beispiele näher erläutert.

Es wurden folgende Formulierungen hergestellt:

### Formulierung 1:

| | |
|---|---|
| 97.2 Gew.-% | API Zement der Klasse G |
| 2.2 Gew.-% | in Wasser redispergierbares Dispersionspulver |
| 0.15 Gew.-% | Hydroxyethyl Cellulose H100000YP2 |
| 0.5 Gew.-% | Sulfoniertes Polykondensationsprodukt auf Melamin-Basis |

Der Wasser-Zementfaktor wurde auf einen Wert von w/z = 0.44 eingestellt.

### Formulierung 2:

| | |
|---|---|
| 93.4 Gew.-% | API Zement der Klasse G |
| 2.2 Gew.-% | in Wasser redispergierbares Dispersionspulver |
| 0.4 Gew.-% | Aceton-Formaldehyd-Sulfit Kondensat |
| 4.0 Gew.-% | Wasserretentionsmittel ("fluid loss control agent") auf Basis eines Sulfonsäure-Polymerisates |

Der Wasser-Zementfaktor (w/z) wurde auf einen Wert von 0.44 eingestellt. Es resultierte eine gut zu verarbeitende Zementslurry mit einer Dichte von 1.9 g/ cm³.

### Formulierung 3:

| | |
|---|---|
| 92.7 Gew.-% | API Zement der Klasse G |
| 2.2 Gew.-% | in Wasser redispergierbares Dispersionspulver |
| 0.4 Gew.-% | Aceton-Formaldehyd-Sulfit Kondensat |
| 4.0 Gew.-% | Wasserretentionsmittel ("fluid loss control agent") auf Basis eines Sulfonsäure-Polymerisates |
| 0.06 Gew.-% | handelsüblicher Abbindeverzögerer |
| 0.6 Gew.-% | handelsüblicher Entschäumer |

Der Wasser-Zementfaktor (w/z) wurde auf einen Wert von 0.44 eingestellt. Es resultierte eine gut zu verarbeitende Zementslurry mit einer Dichte von 1.9 g/ cm³.

### Formulierung 4:

| | |
|---|---|
| 59.4 Gew.-% | API Zement der Klasse G |
| 33.3 Gew.-% | Quarzmehl |
| 2.2 Gew.-% | in Wasser redispergierbares Dispersionspulver, |
| 0.4 Gew.-% | Aceton-Formaldehyd-Sulfit Kondensat |
| 4.0 Gew.-% | Wasserretentionsmittel ("fluid loss control agent") auf Basis eines Sulfonsäure-Polymerisates |
| 0.06 Gew.-% | Handelsüblicher Abbindeverzögerer |
| 0.6 Gew.-% | Handelsüblicher Entschäumer |

Der Wasser-Zementfaktor (w/z) wurde auf einen Wert von 0.55 eingestellt. Es resultierte eine gut zu verarbeitende Zementslurry mit einer Dichte von 1.9 g/ cm³.

### Eingesetzte Dispersionspulver:

- Ref-1:: Kommerziell eingesetzter Referenz-Latex auf Styrol-Butadien - Basis.
- Ref-2:: Es wurde kein Latex eingesetzt.
- EVA-1:: In Wasser redispergierbares Dispersionspulver auf Basis einer mit Polyvinylalkohol stabilisierten wässrigen Ethylen-Vinylacetat - Dispersion.
- St/Ac-1:: In Wasser redispergierbares Dispersionspulver auf Basis einer mit Polyvinylalkohol stabilisierten wässrigen Styrol-Acrylat - Dispersion.
- St/Ac-2:: In Wasser redispergierbares Dispersionspulver auf Basis einer wässrigen, emulgatorfreien Styrol-Acrylat - Dispersion, welche mittels eines mit kationischen Gruppen enthaltenden, wasserunlöslichen (Meth-) Acrylat-basierten Copolymerisat stabilisiert wurde. Der Anteil des tertiärer Ammonium-Gruppen enthaltenden Monomers beträgt 4.1 Gew.-%, bezogen auf die gesamte Monomermenge.
- St/Ac-3:: In Wasser redispergierbares Dispersionspulver auf Basis einer wässrigen, emulgatorfreien Styrol-Acrylat - Dispersion, welche mittels eines mit Sulfonat-Gruppen enthaltenden, wasserunlöslichen (Meth-) Acrylat-basierten Copolymerisat stabilisiert wurde. Der Anteil des Sulfonat-Gruppen enthaltenden Monomers beträgt 5.4 Gew.-%, bezogen auf die gesamte Monomermenge.
- St/Ac-4:: In Wasser redispergierbares Dispersionspulver auf Basis einer wässrigen, emulgatorfreien Styrol-Acrylat Dispersion, welche mittels einem mit Sulfonat-Gruppen enthaltenden, wasserunlöslichen (Meth-) Acrylat-basierten Copolymerisat stabilisiert wurde. Der Anteil des Sulfonat-Gruppen enthaltenden Monomers beträgt 2.8 Gew.-%, bezogen auf die gesamte Monomermenge.

### Beispiel 1:

500 g der Formulierung 1 wurden mit Wasser mit einem 60mm Propellerrührer mit einer Geschwindigkeit von 950 Upm während 60 Sekunden angerührt, wobei die entsprechende Menge Anmachwasser unter Rühren zugegeben wurde. Nach einer Reifezeit von 3 Minuten wurde der Mörtel von Hand nochmals kurz aufgerührt, wobei anschliessend das Abbindeverhalten bei 23°C und 50% relativer Luftfeuchtigkeit mit einem Vicat-Nadelgerät nach DIN 1164 gemessen wurde.

In Figur 1 (Fig. 1) sind die Abbindekurven dargestellt, wobei die obere Kurve mit dem in Wasser redispergierbaren Dispersionspulver St/Ac-4 erhalten wurde. Der Abbindebeginn war nach ca. 10 Stunden und das Abbindeende nach ca. 11 ¼ Stunden. Die untere Kurve wurde mit einer handelsüblichen Styrol-Butadien - Dispersion gemessen, welche zum Zementieren von Erdbohrlöchern eingesetzt wird. Der Abbindebeginn war nach ca. 17 Stunden, und das Abbindeende nach ca. 20 Stunden. Als Vergleich wurde zudem ein in Wasser redispergierbaren Dispersionspulver St/Ac-1 gemessen, wobei der Abbindebeginn nach ca. 13 Stunden und das Abbindeende nach ca. 14 ½ Stunden war.

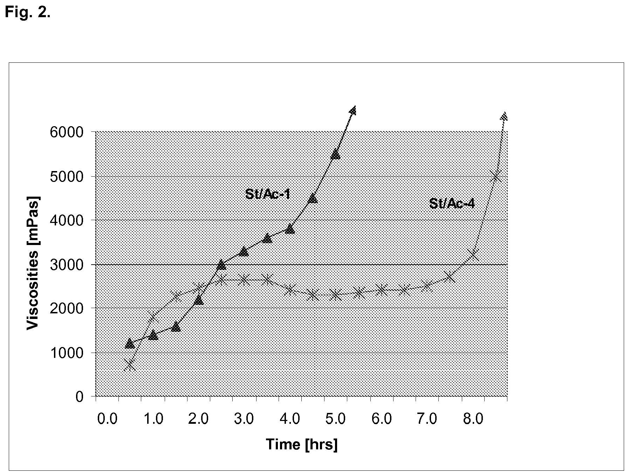

Die gleiche Formulierung wurde erneut angerührt, wobei nach der Reifezeit und dem nochmaligen Anrühren des Mörtels dieser anschliessend in je 20 verschiedene Glasbehälter mit je 20 ml der erhaltenen Zementslurry gefüllt wurde. Die Glasbehälter wurden verschlossen und 15 Minuten nach Beginn des Anrührvorganges in ein Wasserbad von 90°C gestellt. Nach jeder halben Stunde wurde ein Glasbehälter aus dem Wasserbad genommen und ohne weiteres Aufrühren sofort die Brookfield Viskosität gemessen. Messwerte oberhalb 6000 mPas konnten keine gemessen werden, da der Mörtel zu hoch viskos (St/Ac-1), respektive schon hart (St/Ac-4) war. Die Brookfield Viskositäten wurden in Anlehnung an ASTM D1084 mit Spindel 5 bei 100 Upm gemessen und sind in Figur 2 (Fig. 2) dargestellt.

Aus den beiden Tests geht deutlich hervor, dass das in Wasser redispergierbare Dispersionspulver St/Ac-1 bei 90°C in der auf der Formulierung 1 beruhenden Zementslurry nicht etwa den Abbindeprozess beschleunigt, sondern geliert, was zu der kontinuierlich höheren Viskosität führt. Um St/Ac-1 auch bei höheren Temperaturen einzusetzen, müssen noch zusätzliche Stabilisierungsmittel zugegeben werden, um das gewünschte rechtwicklige Abbindeverhalten zu erhalten. St/Ac-4 hingegen zeigt auch ohne zusätzliche Stabilisierungsmittel das für höhere Einsatztemperaturen wichtige rechtwicklige Abbindeverhalten, wobei der Viskositätsanstieg zu Beginn der Messerie auf die nicht ganz idealen Versuchsbedingungen zurückzuführen ist, wie beispielsweise keine kontinuierliche Durchmischung der Probe. Bemerkenswert ist auch die im Vergleich zu St/Ac-1 kurze Zeit zwischen Abbindebeginn und Abbindeende des Mörtels, gemessen mit dem Vicat-Nadelgerät bei Raumtemperatur.

### Beispiel 2:

Die Formulierung 2 wurde nach der Methode API standard RP 10 B, section 5 des American Petroleum Institute bei Raumtemperatur bei hoher Scherrate mit einem "Waring Blendor" Mischer angerührt und anschliessend bei 93°C in einem sogenannten "atmospheric consistometer", Typ Chandler, gemäss API Standard RP 10 B, section 9, gerührt. Alle in der Tabelle 1 aufgeführten Proben zeigten eine gute Stabilität der erhaltenen Zementslurry, wobei kein freies Wasser beobachtet wurde.

Die Rheologischen Parameter wurden anhand eines FANN 35 V-G Viskosimeters bei der Messtemperatur ermittelt, gemäss API Standard RP 10 B, Appendix H.

Die Werte der Tabelle 1 zeigen deutlich, dass sich die in Wasser redispergierbaren Dispersionspulver auf Basis von mit Polyvinylalkohol stabilisierten wässrigen Dispersionen, wie EVA-1 und St/Ac-1 ohne zusätzliche Stabilisierungmittel für den Einsatz bei höheren Temperaturen weniger eignen. Hingegen können die in Wasser redispergierbare Dispersionspulver St/Ac-2, St/Ac-3 und St/Ac-4 ohne weitere Additive eingesetzt werden. Sie führen zu keinen unerwünschten Effekten, wie die Werte im Vergleich zur Referenz Ref-1, enthaltend einen kommerziell eingesetzten Latex, und zur Referenz Ref-2, enthaltend weder einen Latex noch ein Dispersionspulver, zeigen.

**Tabelle 1: Rheologische Eigenschaften nach API Standard RP 10 B, gemessen bei 93°C, von verschiedenen in Wasser redispergierbaren Dispersionspulvern in einer Zementslurry basierend auf Formulierung 2.**

| Pulver Nr. | Ausbreitmass ^{a)} [cm] | API Wasserverlust ^{b)} [ml] | Fliess-index ^{c)} | Verdickungszeit ^{d)} [min] | Druckfestigkeit ^{e)} [MPa] |
|---|---|---|---|---|---|
| **Anforderung** ^{f)} | **26+/-2** | **<50** | **>0.75** | **135+/-30** | **>14** |
| Ref-1 | 28 | 24 | 0.920 | 154 | 19.7 |
| Ref-2 | 26 | 28 | 0.901 | 135 | 24.3 |
| EVA-1 | 26 | 88 | n.m. ^{g)} | 145 | n.m. ^{g)} |
| St/Ac-1 | 25 | 80 | n.m. ^{g)} | 213 | n.m. ^{g)} |
| St/Ac-2 | 24 | 32 | 0.885 | n.m. ^{g)} | n.m. ^{g)} |
| St/Ac-3 | 24 | 22 | 0.877 | 124 | 20.3 |
| St/Ac-4 | 25 | 26 | 0.821 | 164 | 19.2 |

| | | | | | |
|---|---|---|---|---|---|
| a) Das Ausbreitmass ("Flowing degree") ist in Zentimern angegeben. b) Der Wasserverlust nach API ("API water loss") bezieht sich auf die ersten 30 Minuten und ist in Milliliter Wasser angegeben. c) Der Fliess-Index ("Flow Index") wurde bei 93°C bestimmt. d) Als Verdickungszeit ("Thickening time") wird die Zeit in Minuten angegeben, bis bei der Messtemperatur die dimensionslose "Bearden Consistency" von 70 erreicht ist. e) Die Druckfestigkeiten, in MPa angegeben, wurden nach einer Lagerzeit von 24 Stunden gemessen. f) Mit Anforderung ist die zu erreichende Zielgrösse spezifiziert. g) n.m. steht für nicht gemessen ("not measured"). | | | | | |

### Beispiel 3:

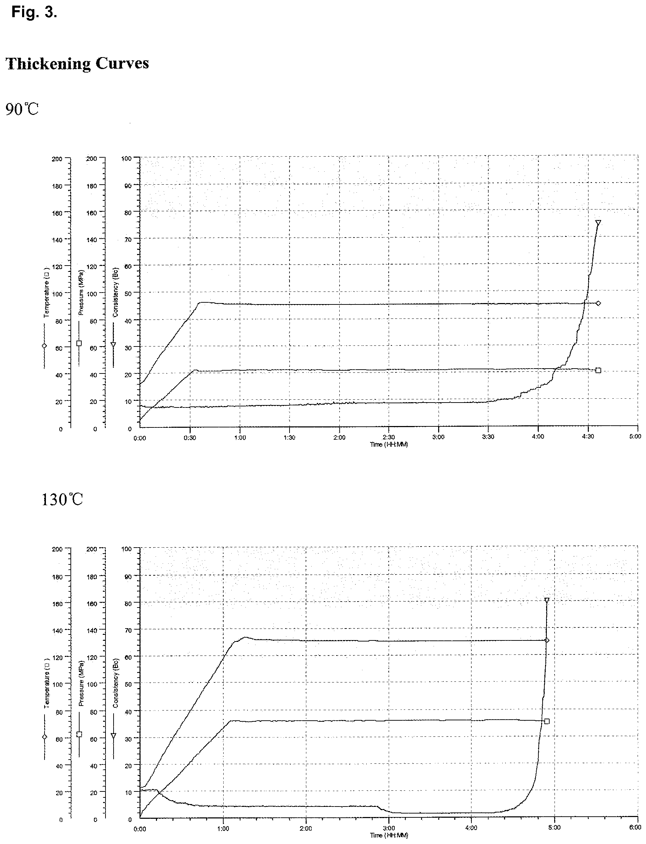

Das Beispiel 2 wurde wiederholt, wobei nur das in Wasser redispergierbare Dispersionspulver St/Ac-4 eingesetzt wurde. Zudem wurde die auf der Formulierung 3 basierende Zementslurry bei 90°C getestet und diejenige basierend auf der Formulierung 4 bei 130°C. Beide Mischungen zeigten eine gute Stabilität ohne freies Wasser. Zudem wurde die jeweilige Zementslurry-Konsistenz in Funktion der Zeit gemessen. Die erhaltenen Werte sind in Figur 3 (Fig. 3) dargestellt und zeigen das rechtwinklige Abbindeverhalten ("right-angle-set") der Zementslurry, welche durch Mischen der erfindungsgemässen Trockenzementformulierung mit Wasser erhalten wurde.

**Tabelle 2: Rheologische Eigenschaften nach API Standard RP 10 B, gemessen bei 90°C und 130°C, des in Wasser redispergierbaren Dispersionspulvers St/Ac-4 in einer Zementslurry basierend auf Formulierung 3 (Messwerte bei 90°C), respektive basierend auf Formulierung 4 (Messwerte bei 130°C).**

| Temperatur | Ausbreitmass ^{a)} [cm] | API Wasserverlust ^{b)} [ml] | Fliess-index ^{c)} | Verdickungszeit ^{d)} [min] | Druckfestigkeit ^{e)} [MPa] |
|---|---|---|---|---|---|
| **Anforderung** ^{f)} | **26+/-2** | **<50** | **>0.75** | **N/A** ^{g)} | **>14** |
| 90 °C | 25 | 24 | 0.885 | 276 | 18.6 |
| 130 °C | 24 | 46 | 0.823 | 294 | 19.5 |

| | | | | | |
|---|---|---|---|---|---|
| a) vgl. Tabelle 1. b) vgl. Tabelle 1. c) vgl. Tabelle 1. d) vgl. Tabelle 1, Figur 1 und die Erklärungen dazu im Text. e) vgl. Tabelle 1. f) vgl. Tabelle 1. g) Die Verdickungszeit kann mittels Abbindeverzögerer eingestellt werden. Es existiert deshalb keinen Sollwert. | | | | | |

Wird der Anteil der Monomere mit ionischen Gruppen bei der Herstellung der Dispersion erhöht, kann die Stabilität des daraus hergestellten Dispersionspulvers auch bei noch höheren Temperaturen gewährleistet werden. Zudem kann gegebenenfalls das eingesetzte Dispergiermittel reduziert oder sogar ganz darauf verzichtet werden.

Die Beispiele zeigen, dass die in Wasser redispergierbaren Dispersionspulver überraschenderweise auch dann gut redispergieren, wenn erfindungsgemässe Trockenzementformulierungen mit Wasser vermischt werden. Die durch den hohen Zementanteil verursachte hohe lonogenität und den stark alkalischen pH-Wert führen zu keinerlei Koagulaten oder anderweitigen negativen Interaktionen. Insbesondere sind bei solch extremen Bedingungen auch keine Füllstoffe wie Quarzsande notwendig, welche beim Anrührprozess durch die entstehenden hohen Scherkräfte die Redispersion unterstützen.

Die so erhaltenen und ausgehärteten Zementslurries können auch bei erhöhtem Druck neu gebohrte wie auch bestehende Erdbohrlöcher gegen eindringendes Wasser oder Erdgas abdichten. Dadurch verringert sich die Gefahr einer plötzlichen starken Freisetzung von Erdgas stark.

## Patentansprüche

1. Trockenzementformulierung zum Zementieren von Erdbohrlöchern, insbesondere von Öl-, Gas- und/ oder Erdwärme-Bohrlöchern, bestehend aus
a) 20 bis 99.9 Gew.-% Zement,
b) 0 bis 65 Gew.-% Quarzmehl und/ oder Quarzstaub,
c) 0.1 bis 30 Gew.-% in Wasser redispergierbares Dispersionspulver, sowie
d) 0 bis 20 Gew.-% weitere Additive

2. Trockenzementformulierung nach Anspruch 1, **dadurch gekennzeichnet, dass** der Zement mindestens ein API Zement der Klassen A bis J, wie definiert in API Spec 10A, 22nd Edition, Jan. 1, 1995, enthält.

3. Trockenzementformulierung nach Anspruch 1 oder 2, **dadurch gekennzeichnet, dass** das in Wasser redispergierbare Dispersionspulver auf eine wässrige, ionische Gruppen enthaltende Dispersion zurückgeht, wobei die ionischen Gruppen insbesondere von copolymerisierten ionischen Monomeren herrühren.

4. Trockenzementformulierung nach mindestens einem der Ansprüche 1 bis 3, **dadurch gekennzeichnet, dass** das in Wasser redispergierbare Dispersionspulver auf eine oder mehrere getrocknete Styrol-Butadien-, Styrol-Acrylat-, Reinacrylat- und/ oder Vinylversatat-Acrylat-Copolymer - Dispersionen zurückgeht.

5. Trockenzementformulierung nach mindestens einem der Ansprüche 1 bis 4, **dadurch gekennzeichnet, dass** das in Wasser redispergierbare Dispersionspulver keine Emulgatoren oder nur einen Anteil von weniger als 3 Gew.-%, insbesondere von weniger als 2 Gew.-%, Emulgatoren, bezogen auf den Monomeranteil des in Wasser redispergierbaren Dispersionspulvers, enthält.

6. Trockenzementformulierung nach mindestens einem der Ansprüche 1 bis 5, **dadurch gekennzeichnet, dass** nach API Specification 10 bei +50°C und höher, insbesondere von +70°C und höher, der Wasserverlust der mit Wasser angerührten Trockenzementformulierung weniger als 100 ml/ 30 min, insbesondere weniger als 75 ml/ 30 min, beträgt.

7. Trockenzementformulierung nach mindestens einem der Ansprüche 1 bis 6, **dadurch gekennzeichnet, dass** die mit Wasser angerührte Trockenzementformulierung bei einer Temperatur von +30°C und höher, insbesondere von +50°C und höher, ein im Wesentlichen rechtwinkliges Abbindeverhalten aufweist

8. Trockenzementformulierung nach mindestens einem der Ansprüche 1 bis 7, **dadurch gekennzeichnet, dass** die weiteren Additive Dispergiermittel, Stabilisatoren, Zementverflüssiger, Additive zur Steuerung der Zementhydratation, insbesondere Abbindeverzögerer, Wasserretentionsmittel, Entschäumer, Fasern, Flugasche, Silikate und/ oder Aluminiumsilikate sind.

9. Trockenzementformulierung nach mindestens einem der Ansprüche 1 bis 8, **dadurch gekennzeichnet, dass** der Siebrückstand der Trockenzementformulierung nach deren Sieben durch ein 400 µm Sieb, insbesondere durch ein 250 µm Sieb, höchstens 5 Gew.-% beträgt.

10. Verwendung der Trockenzementformulierung nach mindestens einem der Ansprüche 1 bis 9 zum Herstellen einer Zementslurry zum Zementieren von Erdbohrlöchern, wobei die Zementslurry durch Vermischen der Trockenformulierung mit Wasser erhalten wird.

11. Verwendung der nach Anspruch 10 hergestellten Zementslurry während oder direkt nach dem Bohren der Erdbohrlöcher und/ oder zum Abdichten bestehender Erdbohrlöcher.

12. Verwendung der nach Anspruch 10 hergestellten Zementslurry zur Reduktion der Gas- und/ oder Wasserpenetration und/ oder zum Abdichten der Gas- und/ oder Wasserkanäle durch die ins Bohrloch eingebrachte und ausgehärtete Zementslurry.

13. Verwendung der nach Anspruch 10 hergestellten Zementslurry zur Reduktion der Gas- und/ oder Wasserpenetration und/ oder zum Abdichten der Gas- und/ oder Wasserkanäle durch die in Erdbohrlöcher, insbesondere in Öl-, Gas- und/ oder Erdwärme-Bohrlöcher, eingebrachte und ausgehärtete Zementslurry.

14. Verwendung der nach Anspruch 10 hergestellten Zementslurry zum Zementieren von Erdbohrlöchern, insbesondere von Öl-, Gas- und/ oder Erdwärme-Bohrlöchern, bei Erdbohrlochtemperaturen von +30°C oder höher, insbesondere von +50°C und höher.

15. Verwendung der nach Anspruch 10 hergestellten Zementslurry zur Reduktion des Wasserverlustes der Zementslurry, wobei der Wasserverlust nach API Specification RP 10 B, wie definiert in API Spec. 10, 5th Edition, July 1, 1990, bei +50°C und höher, insbesondere bei +70°C und höher, weniger als 100 ml/ 30 min, insbesondere weniger als 75 ml/ 30 min beträgt.

## Claims

1. Dry cement formulation for cementing earth boreholes, in particular oil, gas and/or terrestrial heat boreholes, consisting of
a) 20 to 99.9 wt.% cement,
b) 0 to 65 wt.% powdered quartz and/or quartz dust,
c) 0.1 to 30 wt.% water-redispersible dispersion powder, and
d) 0 to 20 wt.% further additives.

2. Dry cement formulation according to claim 1, **characterised in that** the cement contains at least one API cement of the classes A to J as defined in API Spec. 10A, 22^{nd} Edition, Jan. 1, 1995.

3. Dry cement formulation according to claim 1 or 2, **characterised in that** the water-redispersible dispersion powder traces back to an aqueous, ionic groups-containing dispersion, wherein the ionic groups originate in particular from copolymerised ionic monomers.

4. Dry cement formulation according to at least one of claims 1 to 3, **characterised in that** the water-redispersible dispersion powder traces back to one or several dried styrene-butadiene, styrene-acrylate, pure acrylate and/or vinylversatate-acrylate copolymer dispersions.

5. Dry cement formulation according to at least one of claims 1 to 4, **characterised in that** the water-redispersible dispersion powder does not contain any emulsifiers or contains only a share of less than 3 wt.%, in particular of less than 2 wt.%, of emulsifiers, based on the monomer share of the water-redispersible dispersion powder.

6. Dry cement formulation according to at least one of claims 1 to 5, **characterised in that** in accordance with API Specification 10 at +50°C and higher, in particular +70°C and higher, the water loss of the dry cement formulation mixed with water is less than 100 ml/30 min, in particular less than 75 ml/30 min.

7. Dry cement formulation according to at least one of claims 1 to 6, **characterised in that** at a temperature of +30°C and higher, in particular of +50°C and higher, the dry cement formulation mixed with water shows an essentially right-angle set.

8. Dry cement formulation according to at least one of claims 1 to 7, **characterised in that** the further additives are dispersing agents, stabilisers, cement superplasticisers, additives to control cement hydration, in particular setting retarders, water retention agents, defoamers, fibres, fly ash, silicates and/or aluminium silicates.

9. Dry cement formulation according to at least one of claims 1 to 8, **characterised in that** the sieve residue of the dry cement formulation after sieving through a 400 µm sieve, in particular through a 250 µm sieve, is at most 5 wt.%.

10. Use of the dry cement formulation according to at least one of claims 1 to 9 for preparing a cement slurry for cementing earth boreholes, wherein the cement slurry is obtained by mixing the dry formulation with water.

11. Use of the cement slurry prepared according to claim 10 during or directly after the drilling of the earth boreholes and/or for sealing off existing earth boreholes.

12. Use of the cement slurry prepared according to claim 10 for reducing the gas and/or water penetration and/or for sealing off the gas and/or water channels by means of the cement slurry which has been introduced into the borehole and has set.

13. Use of the cement slurry prepared according to claim 10 for reducing the gas and/or water penetration and/or for sealing off the gas and/or water channels by means of the cement slurry which has been introduced into earth boreholes, in particular into oil, gas and/or terrestrial heat boreholes, and has set.

14. Use of the cement slurry prepared according to claim 10 for cementing earth boreholes, in particular oil, gas and/or terrestrial heat boreholes, at earth borehole temperatures of +30°C or higher, in particular of +50°C and higher.

15. Use of the cement slurry prepared according to claim 10 for reducing the water loss of the cement slurry, wherein the water loss in accordance with API Specification RP 10 B, as defined in API Spec. 10, 5^{th} Edition, July 1, 1990, at +50°C and higher, in particular at +70°C and higher, is less than 100 ml/30 min, in particular less than 75 ml/30 min.

## Revendications

1. Formulation de ciment sèche servant à cimenter des trous de forage dans le sol, en particulier des trous de forage pour pétrole, pour gaz et/ou de géothermie, constituée de
a) 20 à 99,9 % en poids de ciment,
b) 0 à 65 % en poids de poudre de quartz et/ou de poussières de quartz,
c) 0,1 à 30 % en poids d'une poudre de dispersion redispersible dans l'eau, et
d) 0 à 20 % en poids d'autres additifs.

2. Formulation de ciment sèche selon la revendication 1, **caractérisée en ce que** le ciment contient au moins un ciment API des classes A à J, telles que définies dans API Spec 10A, 22^{e} édition, 1^{er} janv. 1995.

3. Formulation de ciment sèche selon la revendication 1 ou 2, **caractérisée en ce que** la poudre de dispersion redispersible dans l'eau est liée à une dispersion aqueuse contenant des groupes ioniques, dans laquelle les groupes ioniques proviennent en particulier de monomères ioniques copolymérisés.

4. Formulation de ciment sèche selon au moins l'une quelconque des revendications 1 à 3, **caractérisée en ce que** la poudre de dispersion redispersible dans l'eau est liée à une ou plusieurs dispersions séchées de styrène-butadiène, de styrène-acrylate, d'acrylate pur et/ou de copolymère de versatate de vinyle-acrylate.

5. Formulation de ciment sèche selon au moins l'une quelconque des revendications 1 à 4, **caractérisée en ce que** la poudre de dispersion redispersible dans l'eau ne contient aucun émulsifiant ou seulement une fraction inférieure à 3 % en poids, en particulier inférieure à 2 % en poids, d'émulsifiants, par rapport à la fraction de monomères de la poudre de dispersion redispersible dans l'eau.

6. Formulation de ciment sèche selon au moins l'une quelconque des revendications 1 à 5, **caractérisée en ce que** selon API Specification 10, à +50 °C et plus, en particulier à +70 °C et à plus, la perte en eau de la formulation de ciment sèche mélangée à de l'eau est inférieure à 100 ml/30 min, en particulier inférieure à 75 ml/30 min.

7. Formulation de ciment sèche selon au moins l'une quelconque des revendications 1 à 6, **caractérisée en ce que** la formulation de ciment sèche mélangée à de l'eau présente, à une température de +30 °C et plus, en particulier de +50 °C et plus, un comportement de prise sensiblement à angle droit.

8. Formulation de ciment sèche selon au moins l'une quelconque des revendications 1 à 7, **caractérisée en ce que** les autres additifs sont des agents de dispersion, des agents stabilisants, des fluidifiants de ciment, des additifs servant à piloter l'hydratation de ciment, en particulier des retardateurs de prise, des agents de rétention d'eau, des agents anti-mousse, des fibres, des cendres volatiles, des silicates et/ou des silicates d'aluminium.

9. Formulation de ciment sèche selon au moins l'une quelconque des revendications 1 à 8, **caractérisée en ce que** les résidus issus du tamisage de la formulation de ciment sèche sont au maximum de 5 % en poids après leur tamisage par un tamis de 400 µm, en particulier par un tamis de 250 µm.

10. Utilisation de la formulation de ciment sèche selon au moins l'une quelconque des revendications 1 à 9 servant à fabriquer une boue de ciment servant à cimenter des trous de forage dans le sol, dans laquelle la boue de ciment est obtenue par mélange de la formulation sèche avec de l'eau.

11. Utilisation de la boue de ciment fabriquée selon la revendication 10 pendant ou directement après le forage des trous de forage dans le sol et/ou servant à étanchéifier des trous de forage dans le sol existants.

12. Utilisation de la boue de ciment fabriquée selon la revendication 10 servant à réduire la pénétration de gaz et/ou d'eau et/ou servant à étanchéifier les canaux de gaz et/ou d'eau par la boue de ciment introduite et durcie dans le trou de forage.

13. Utilisation de la boue de ciment fabriquée selon la revendication 10 servant à réduire la pénétration de gaz et/ou d'eau et/ou servant à étanchéifier les canaux de gaz et/ou d'eau par la boue de ciment introduite et durcie dans les trous de forage dans le sol, en particulier dans des trous de forage pour pétrole, pour gaz et/ou de géothermie.

14. Utilisation de la boue de ciment fabriquée selon la revendication 10 pour cimenter des trous de forage dans le sol, en particulier des trous de forage pour pétrole, pour gaz et/ou de géothermie, à des températures de trou de forage dans le sol de +30 °C ou plus, en particulier de +50 °C ou plus.

15. Utilisation de la boue de ciment fabriquée selon la revendication 10 pour réduire la perte en eau de la boue de ciment, dans laquelle la perte en eau est, selon API Specification RP 10 B, telle que définie dans API Spec. 10, 5^{e} édition, 1^{er} juillet 1990, à +50 °C et plus, en particulier à +70 °C et plus, inférieure à 100 ml/30 min, en particulier inférieure à 75 ml/30 min.
